Europäisches Patentamt

European Patent Office

Office européen des brevets

(11) Publication number: **0 520 543 A1**

# EUROPEAN PATENT APPLICATION

(21) Application number: **92201712.4**

(22) Date of filing: **12.06.92**

(51) Int. Cl.5: **B01J 27/053**, B01J 21/06, B01J 37/03

(30) Priority: **28.06.91 IT MI911794**

(43) Date of publication of application:
**30.12.92 Bulletin 92/53**

(84) Designated Contracting States:
**AT BE CH DE DK ES FR GB GR LI LU MC NL PT SE**

(71) Applicant: ENIRICERCHE S.p.A.
Corso Venezia 16
I-20121 Milan(IT)

(72) Inventor: **Ouadrelli, Paolo**
**Via Giacomo Franchi 10**
**I-27100 Pavia(IT)**
Inventor: **Flego, Cristina**
**Via Pecenco 12**
**I-34127 Trieste(IT)**
Inventor: **Gervasini, Antonella**
**Via Monte Canin**
**I-21100 Varese(IT)**
Inventor: **Clerici, Mario Gabriele**
**Via Europa 34**
**I-20097 San Donato Milanese, Milan(IT)**

(74) Representative: **Roggero, Sergio et al**
**Ing. Barzanò & Zanardo Milano S.p.A. Via Borgonuovo 10**
**I-20121 Milano(IT)**

(54) Superacidic catalyst and process for preparing it.

(57) A superacidic catalyst, sulfated metal oxide, is obtained by means of a process comprising:
(i) hydrolysing a water-soluble compound, capable of being hydrolysed in a water-alkaline medium, of tetravalent zirconium, hafnium or titanium, in order to precipitate a hydrous metal oxide in gel form;
(ii) drying said gel at a temperature comprised within the range of from 150°C to 300°C, in order to obtain a catalyst support;
(iii) impregnating said support by means of a sulfating agent selected from aqueous sulfuric acid or aqueous solution of a sulfate salt;
(iv) drying said impregnated support and calcining it in an oxidizing atmosphere, at a temperature comprised within the range of from 400°C to 700°C.
According to a particular form of practical embodiment, the support obtained from step (iii) is treated with a noble metal compound before being submitted to the end calcination.

The present invention relates to a superacidic catalyst based on sulfated metal oxide, to the process for preparing it and to the use thereof in n-paraffin isomerization processes.

Catalysts based on sulfated oxides of metals belonging to the IV Group of the Periodic System, showing superacidic characteristics, according to the definition given by Gillespie, are known in the art, as described, e.g., by K. Arata, Adv. Catal. 37, 165, 1990.

Such superacidic catalysts are normally obtained by means of a process comprising precipitating the hydrous metal oxide, drying the precipitate, impregnating it with a sulfating agent and finally calcinating it. However, it was possible to observe in practice that the superacidity and the catalyst activity supplied in that way to the material in question, are normally limitative for practical purposes, in particular as regards the processes of isomerization of n-paraffins.

The present Applicant found now, according to the present invention, that a catalyst based on sulfated metal oxides with high acidic characteristics can be obtained by suitably modifying the traditional preparation process, in particular the step of drying the precipitated hydrous oxide.

In accordance therewith, in a first aspect thereof, the present invention relates to a process for preparing a superacidic catalyst, sulfated metal oxide, which process comprises:

(i) hydrolysing a water-soluble compound, capable of being hydrolysed in a water-alkaline medium, of tetravalent zirconium, hafnium or titanium, in order to precipitate a hydrous metal oxide in gel form;

(ii) drying said gel at a temperature comprised within the range of from 150°C to 300°C, in order to obtain a catalyst support;

(iii) impregnating said support by means of a sulfating agent selected from among aqueous sulfuric acid or aqueous solution of a sulfate salt;

(iv) drying said impregnated support and calcining it in an oxidizing environment, at a temperature comprised within the range of from 400°C to 700°C.

According to a particular form of practical embodiment, the support obtained from step (iii) is treated with a noble metal compound before being submitted to the end calcination.

In the step (i) of the process according to the present invention, any compounds of tetravalent zirconium, hafnium or titanium can be used for the impregnation, provided that said compound is water-soluble and is hydrolysable in an aqueous-alkaline environment. Among the several compounds, the halide salts, and in particular chloride salts are preferred, such as, e.g., zirconyl chloride octahydrate $(ZrOCl_2 . \delta H_2O)$, titanium tetrachloride $(TiCl_4)$ and hafnium tetrachloride $(HfCl_4)$.

The compound of zirconium, hafnium and titanium is first dissolved in water, in order to prepare an aqueous solution with a concentration of from 0.1 to 0.5 g/ml, and preferably of the order of 0.4-0.45 g/ml, and the hydrolysis is carried out by operating at room temperature, or at a temperature close to room temperature, with the pH value thereof being adjusted at a value of the order of pH 8-9 by means of the addition of a base, and preferably ammonia. Under these conditions, a practically complete precipitation is accomplished of the hydrous oxide in gel form, and the precipitated gel is separated by means of the usual techniques of decantation, filtration or centrifugation, and is washed with water until the mother liquors are neutral and completely free from chlorides.

In the step (ii) of the process, the precipitated gel is submitted to drying at a temperature comprised within the range of from 150°C to 300°C over a time of from 12 to 48 hours, and operating in an oxidizing atmosphere, and preferably in air.

According to the present invention, it was found that the conditions of step (ii), of gel drying, and in particular, the drying temperature, are critical.

Without desiring to be bound by any specific theories, we believe that during the gel drying step, modifications occur in the hydrous oxide, accompanied by water elimination, of the following type:

Zr-OH + HO-Zr → Zr-O-Zr + $H_2O$

Due to water loss, the solid material undergoes structural modifications, remaining in the amorphous phase within the temperature range of from 150°C to 300°C. Inasmuch as during the sulfation step (iii) the linking of the sulfate groups takes place on residual hydroxy groups, it derives from the above that the degree of gel dehydration, and consequently the drying temperature, play a role of basic importance as regards the reactivity of the gel and consequently on the characteristics of the end catalyst product.

In the step (ii) of the present process, the drying is preferably carried out at a temperature comprised within the range of from 150°C to 300°C over a time of about 24 hours, in air.

After the drying treatment, a support is typically obtained, which has a specific surface-area comprised within the range of from 110 to 400 $m^2/g$, and with a pore volume of from 0.6 to 1.0 ml/g.

The dried gel obtained from step (ii) is used as support for the subsequent step of impregnation with a sulfating agent selected from among aqueous sulfuric acid, and aqueous solution of a sulfate salt, in particular ammonium sulfate.

The impregnation is preferably carried out with aqueous sulfuric acid or aqueous sulfate salt with a concentration of from 0.4 M to 5 M and according to the " wetness imbibition" method, i.e., using in the impregnation, or -- if a plurality of impregnations are carried out -- in each impregnation, a volume of aqueous sulfuric acid which is equal to, or slightly larger than, the total volume of the pores in the support.

The impregnation is carried out at room temperature, or at temperatures close to room temperature, leaving the sulfating agent and the support under mutual contact for a time period of the order of from 12 to 48 hours. Furthermore, the total amount of sulfating agent should be such as to have a sulfur amount in the end catalyst, which is comprised within the range of from 0.5 to 20% by weight and preferably is of the order of from 2 to 5% by weight.

The impregnated support obtained from the step (iii) is first dried at a temperature lower than 100°C, e.g., at a temperature comprised within the range of from 60°C to 80°C, and then is calcined at a temperature comprised within the range of from 400°C to 700°C, for a time of from 1 to 6 hours, in an oxidizing atmosphere, preferably in air.

In the best form of practical embodiment, the impregnated support is gradually heated (with a temperature increase rate of about 3-5°C/minute) from the drying temperature up to about 500°C, and then is kept at that temperature for about 3 hours.

According to a particular form of practical embodiment, the support impregnated with the sulfating agent and dried, is further impregnated, by means of the method of "wetness imbibition" with an aqueous solution of a compound of a noble metal, in order to deposit an amount of noble metal comprised within the range of from about 0.1 to about 3% by weight. For that purpose, hexachloroplatinic acid ($H_2PtCl_6$)and ammonium complexes of tetravalent platinum are preferred. In this impregnation, the aqueous solution containing the platinum compound is allowed to stay in contact with the support for approximately 16 hours, and then the support is dried and calcined by operating under the conditions indicated hereinabove.

The superacidic catalyst obtained according to the process of the present invention essentially is a catalyst based on zirconium, hafnium or titanium sulfate, which contains an amount of from 0.5 to 20%, and preferably of the order of from 2 to 5%, by weight of sulfur, and which may additionally contain a noble metal, and preferably platinum, in an amount of from 0.1 to 3% by weight, and displays values of specific surface-area of the order of 35-180 $m^2$/g.

Such a catalyst is active in the processes of isomerization of n-paraffins, e.g., in the isomerization of n-hexane into methyl-pentanes and dimethyl-butanes.

The following experimental examples are reported in order to illustrate the present invention in greater detail.

Example 1
- - - - - -

An amount of 100 g of zirconyl chloride ($ZrOCl_2.8H_2O$) is dissolved in 230 ml of demineralized water, with strong stirring, at 22°C. The clear solution (pH 0.02) is titrated with 50 ml of $NH_4OH$ at 30% by weight; the end pH is of 8.88. A stirrable gelly mass is formed during the whole titration range, which mass turns into more compact after the addition of 30 ml of ammonium hydroxide solution.

The suspension, of milky-white colour, is filtered and washed with plentiful water until neutral, and absence of chlorides in wash liquors (silver nitrate test). The solid material obtained in that way is broken up and is charged to a capsule, in order to submit it to drying, which is carried out at the temperature of 150°C, for a time of 24 hours, in air.

A portion of the resulting zirconia is submitted to the characterization tests (Table 1) and a further portion is used as support for the impregnation according to the method of "wetness imbibition" with sulfuric acid.

More particularly, 4.5 g of $ZrO_2$ support, sieved on the 100-mesh sieve, is charged to a crystallizer and 4.4 ml of 1.6 M aqueous solution of sulfuric acid is added dropwise, with stirring. The support and the solution are left overnight under mutual contact and then the mixture is dried in an oven at 70°C. The catalyst is calcined in a muffle at 550°C for 3 hours, under a flowing air stream.

0.9 g of the resulting catalyst is used for the characterization tests, and the residual 4 g is charged to a 2-neck flask of 25 ml of capacity, previously thoroughly dried by high-temperature treatment under a flowing dry nitrogen stream and stored inside a desiccator. These operations are carried out in order to secure that the catalyst will be perfectly anhydrous during the catalytic step.

The reaction of isomerization of n-hexane (charged amount 15 ml) is carried out batchwise under refluxing conditions (boiling temperature 69°C), under a dry nitrogen blanketing atmosphere, with stirring.

Known amounts (0.05 ml) of solution are withdrawn at prefixed time intervals, in order to determine the kinetics of the reaction.

In particular, the isomerization products are analysed by gaschromatography on an HP 5890 gas-chromatograph equipped with capillary column Sulpeco SPB-1, 60 m long and with an inner diameter of 0.25 mm, at the temperature of 50°C, FID detector (T = 300°C), injector temperature T = 250°C.

The data of catalyst characterization, and the data relevant to catalyst reactivity are reported in Table 2.

In following Examples from 2 to 5, other catalysts are prepared by operating in a similar way to Example 1, and with variable amounts of sulfur being added to the support of $ZrO_2$ preliminarily dried at 150°C.

Example 2

The process is carried out as in Example 1, by treating 4.5 g of dried support with 4.3 ml of a 0.94 M aqueous solution of sulfuric acid. A catalyst is obtained, which is characterized and submitted to reactivity test. The results are reported in Table 2.

Example 3

The process is carried out as in Example 1, by treating 4.5 g of dried support with 4.3 ml of a 1.3 M aqueous solution of sulfuric acid. A catalyst is obtained, which is characterized and submitted to reactivity test. The results are reported in Table 2.

Example 4

The process is carried out as in Example 1, by treating 4.5 g of dried support with 4.3 ml of a 2.6 M aqueous solution of sulfuric acid. A catalyst is obtained, which is characterized and submitted to reactivity test. The results are reported in Table 2.

Example 5

The process is carried out as in Example 1, by treating 4.5 g of dried support with 4.3 ml of a 4.9 M aqueous solution of sulfuric acid. A catalyst is obtained, which is characterized and submitted to reactivity test. The results are reported in Table 2.

The following examples illustrate the influence of the zirconia drying temperature on the characteristics of the catalysts obtained after treatment with sulfuric acid.

Example 6

A sample of zirconia is prepared by alkaline hydrolysis of zirconyl chloride, according to as disclosed in Example 1. The drying step is carried out in this case at the temperature of 100°C, for 24 hours, under a static air atmosphere.

A sample of the resulting support is submitted to characterization for its pore volume and specific surface-area, and the results are reported in Table 1. Another sample of 4.5 g of the support is impregnated with 3.8 ml of a 1.5 M aqueous solution of sulfuric acid, by operating according to as disclosed in Example 1. A catalyst is obtained, which is characterized and is submitted to the reactivity test. The results are reported in Table 2.

Example 7

4.5 g of support obtained as disclosed in Example 6 is impregnated with 3.8 ml of a 2 M aqueous solution of sulfuric acid, by operating according to as disclosed in Example 1. A catalyst is obtained, which is characterized and submitted to reactivity test. The results are reported in Table 2.

Example 8

4.5 g of support obtained as disclosed in Example 6 is impregnated with 3.8 ml of a 2.5 M aqueous solution of sulfuric acid, by operating according to as disclosed in Example 1. A catalyst is obtained, which is characterized and submitted to reactivity test. The results are reported in Table 2.

Example 9

A sample of zirconia is prepared by alkaline hydrolysis of zirconyl chloride, according to as disclosed in Example 1. The drying step is carried out in this case at the temperature of 200°C, for 24 hours, under a static air atmosphere.

A sample of the resulting support is submitted to characterization for its pore volume and specific surface-area, and the results are reported in Table 1. Another sample of 4.5 g of the support is impregnated with 3.6 ml of a 1.2 M aqueous solution of sulfuric acid, by operating according to as disclosed in Example 1. A catalyst is obtained, which is characterized and is submitted to the reactivity test. The results are reported in Table 2.

Example 10

4.5 g of support obtained as disclosed in Example 9 is impregnated with 3.6 ml of a 1.9 M aqueous solution of sulfuric acid, by operating according to as disclosed in Example 1. A catalyst is obtained, which is characterized and submitted to reactivity test. The results are reported in Table 2.

Example 11

A sample of zirconia is prepared by alkaline hydrolysis of zirconyl chloride, as disclosed in Example 1. The drying step is carried out in this case at the temperature of 250°C, for 24 hours, under a static air atmosphere.

A sample of the resulting support is submitted to characterization for its pore volume and specific surface-area, and the results are reported in Table 1. Another sample of 4.5 g of the support is impregnated with 3.6 ml of an 0.4 M aqueous solution of sulfuric acid, by operating according to as disclosed in Example 1. A catalyst is obtained, which is characterized and is submitted to the reactivity test. The results are reported in Table 2.

Example 12

4.5 g of support obtained as disclosed in Example 11 is impregnated with 3.6 ml of an 0.8 M aqueous solution of sulfuric acid, by operating according to as disclosed in Example 1. A catalyst is obtained, which is characterized and is submitted to reactivity test. The results are reported in Table 2.

Example 13

4.5 g of support obtained as disclosed in Example 11 is impregnated with 3.6 ml of a 2 M aqueous solution of sulfuric acid, by operating according to as disclosed in Example 1. A catalyst is obtained, which is characterized and is submitted to reactivity test. The results are reported in Table 2.

Example 14

A sample of zirconia is prepared by alkaline hydrolysis of zirconyl chloride, as disclosed in Example 1. The drying step is carried out in this case at the temperature of 300°C, for 24 hours, under a static air atmosphere.

A sample of the resulting support is submitted to characterization for its pore volume and specific surface-area, and the results are reported in Table 1. Another sample of 4.5 g of the support is impregnated with 3.6 ml of an 0.4 M aqueous solution of sulfuric acid, by operating according to as disclosed in Example 1. A catalyst is obtained, which is characterized and is submitted to the reactivity test. The results are reported in Table 2.

Example 15

4.5 g of support obtained as disclosed in Example 14 is impregnated with 3.3 ml of a 1.3 M aqueous solution of sulfuric acid, by operating according to as disclosed in Example 1. A catalyst is obtained, which is characterized and submitted to reactivity test. The results are reported in Table 2.

Example 16

4.5 g of support obtained as disclosed in Example 14 is impregnated with 3.3 ml of a 2.1 M aqueous solution of sulfuric acid, by operating according to as disclosed in Example 1. A catalyst is obtained, which is characterized and submitted to reactivity test. The results are reported in Table 2.

Example 17

4.5 g of support obtained as disclosed in Example 14 is impregnated with 3.3 ml of a 3.4 M aqueous solution of sulfuric acid, by operating according to as disclosed in Example 1. A catalyst is obtained, which is characterized and is submitted to reactivity test. The results are reported in Table 2.

Example 18

A sample of zirconia is prepared by alkaline hydrolysis of zirconyl chloride, as disclosed in Example 1. The drying step is carried out in this case at the temperature of 350°C, for 24 hours, under a static air atmosphere.

A sample of the resulting support is submitted to characterization for its pore volume and specific surface-area, and the results are reported in Table 1. Another sample of 4.5 g of the support is impregnated with 2.8 ml of a 1.0 M aqueous solution of sulfuric acid, by operating according to as disclosed in Example 1. A catalyst is obtained, which is characterized and is submitted to the reactivity test. The results are reported in Table 2.

Example 19

4.5 g of support obtained as disclosed in Example 18 is impregnated with 3.3 ml of a 2.5 M aqueous solution of sulfuric acid, by operating as disclosed in Example 1. A catalyst is obtained, which is characterized and submitted to reactivity test. The results are reported in Table 2.

Example 20

A sample of zirconia is prepared by alkaline hydrolysis of zirconyl chloride, as disclosed in Example 1. The drying step is carried out in this case at the temperature of 400°C, for 24 hours, under a static air atmosphere.

A sample of the resulting support is submitted to characterization for its pore volume and specific surface-area, and the results are reported in Table 1. Another sample of 4.5 g of the support is impregnated with 2.8 ml of a 0.6 M aqueous solution of sulfuric acid, by operating according to as disclosed in Example 1. A catalyst is obtained, which is characterized and is submitted to the reactivity test. The results are reported in Table 2.

Example 21

4.5 g of support obtained as disclosed in Example 20 is impregnated with 2.8 ml of a 2.5 M aqueous solution of sulfuric acid, by operating as disclosed in Example 1. A catalyst is obtained, which is characterized and submitted to reactivity test. The results are reported in Table 2.

Example 22

Following the procedure of Example 1, a zirconia dried at 150°C is prepared.

4.5 g of the resulting zirconia is first impregnated with 4.3 ml of a 2 M aqueous solution of sulfuric acid, is dried, and is subsequently impregnated by operating according to the same modalities, with 4.3 ml of a 0.02 M aqueous solution of $H_2PtCl_6$.

The subsequent drying and calcination steps are carried out according to as disclosed in Example 1.

The catalytic testing of the noble metal-containing samples requires that the tests are carried out under a hydrogen atmosphere, in order that the metal may be present in its reduced form, and hence active as co-catalyst.

The reaction is therefore carried out in a glass autoclave of 100 ml of capacity, charged with 3 atm of hydrogen. The amounts of catalyst and n-hexane are kept equal to those disclosed in Example 1. In table 2, the data from catalyst characterization and those relevant to catalyst activity are reported.

Example 23

Following the procedure of Example 1, a gel of hydrous hafnium oxide $HfO_2.nH_2O$ is prepared from hafnium tetrachloride ($HfCl_4$). This gel is dried at 150°C for 24 hours in air and the dried product is characterized by determining the specific surface-area and the pore volume thereof. The values are reported in Table 1.

4.5 g of the resulting support is impregnated with 2.3 ml of a 2.5 M aqueous solution of sulfuric acid, is dried at 70°C, and is subsequently calcined at 550°C for 3 hours, in air.

In Table 2, the data from catalyst characterization and the data relevant to the reactivity thereof are reported.

Example 24

4.5 g of the support prepared in Example 23 is treated with 2.3 ml of a 2.1 M aqueous solution of sulfuric acid, is dried, and is subsequently impregnated with 2.3 ml of a 0.05 M aqueous solution of $H_2PtCl_6$. After a further drying, the sample is calcined and is submitted to the usual characterizations.

The results of these characterizations and of the catalytic test, carried out as in Example 22, are reported in Table 2.

Example 25

Following the procedure of Example 1, a gel of hydrous titanium oxide $TiO_2.nH_2O$ is prepared from titanium tetrachloride ($TiCl_4$), which is slowly added dropwise to water, in order to prevent violent reactions from occurring. The resulting gel is dried at 150°C for 24 hours in air and the dried product is then characterized as reported in Example 1.

The usual impregnation with 2.1 M aqueous sulfuric acid (3.3 ml) brings to the formation of a catalyst, the characteristics of which are reported in Table 2.

Example 26

With the support prepared according to Example 25, a double impregnation is carried out, i.e., initially with 2.1 M aqueous sulfuric acid (3.3 ml), and, after drying, with 0.02 M $H_2PtCl_6$ (3.3 ml).

In Table 2, the results are reported of the physical-chemical characterizations, and of the test of catalytic activity, with the latter being carried out as disclosed in Example 22.

Table 1

| Support characterization | | | |
|---|---|---|---|
| Example No. | Drying Temperature (°C) | Specific Surface area * (m²/g) | Pore volume (ml/g) |
| 1 | 150 | 402.0 | 0.958 |
| 6 | 100 | 353.3 | 0.840 |
| 9 | 200 | 334.7 | 0.789 |
| 11 | 250 | 239.2 | 0.795 |
| 14 | 300 | 218.6 | 0.720 |
| 18 | 350 | 196.1 | 0.618 |
| 20 | 400 | 113.6 | 0.622 |
| 23 | 150 | 218.2 | 0.490 |
| 25 | 150 | 378.7 | 0.731 |

(*) As determined by means of Carlo Erba's Sorpty 1750 apparatus, according to the BET method, with $N_2$ at -197°C; the specific surface area after calcination at 550°C for a 3-hour time under a flowing air stream, results to be of 50.12 ± 0.10 m²/g for all supports.

Table_2

Catalyst_characterization_and_reactivity

| Example No. | Drying Temper. (°C) | Specific Surface area * (m²/g) | Sulfur (% by weight) | Conversion* (%) |
|---|---|---|---|---|
| 1 | 150 | 133.07 | 4.70 | 12.45 |
| 2 | 150 | 156.46 | 2.85 | 2.38 |
| 3 | 150 | 190.62 | 3.90 | 3.33 |
| 4 | 150 | 100.37 | 7.60 | 0.93 |
| 5 | 150 | 35.68 | 14.25 | no reaction |
| 6 | 100 | 94.38 | 3.98 | no reaction |
| 7 | 100 | 65.88 | 5.42 | 0.2 |
| 8 | 100 | 36.71 | 6.47 | no reaction |
| 9 | 200 | 156.43 | 2.80 | 30.04 |
| 10 | 200 | 160.20 | 5.0 | 5.2 |
| 11 | 250 | 140.91 | 1.0 | 2.7 |
| 12 | 250 | 180.58 | 1.74 | 33.28 |
| 13 | 250 | ----- | 5.36 | 20.34 |
| 14 | 300 | 160.02 | 1.0 | 0.33 |
| 15 | 300 | 179.91 | 2.85 | 25.84 |
| 16 | 300 | 142.67 | 4.75 | 10.49 |
| 17 | 300 | 126.78 | 7.60 | 1.67 |
| 18 | 350 | 140.73 | 1.90 | 0.35 |
| 19 | 350 | 126.94 | 4.70 | no reaction |
| 20 | 400 | 99.39 | 1.2 | no reaction |
| 21 | 400 | 76.96 | 5.0 | 0.1 |
| 22 | 150 | ----- | 6.08 | 27.97 |
| 23 | 150 | 142.3 | 4.00 | 17.36 |

## Table 2 (continuation)

### Catalyst characterization and reactivity

| Example No. | Drying Temper. (°C) | Specific Surface area * (m²/g) | Sulfur (% by weight) | Conversion* (%) |
|---|---|---|---|---|
| 24 | 150 | ----- | 3.30 | 30.01 |
| 25 | 150 | 123.3 | 5.00 | 0.26 |
| 26 | 150 | ----- | 5.00 | 0.72 |

(*) = Conversion of n-hexane after a 2-hour reaction.

**Claims**

1. Process for preparing a superacidic catalyst, sulfated metal oxide, which process comprises:
   (i) hydrolysing a water-soluble compound, capable of being hydrolysed in a water-alkaline medium, of tetravalent zirconium, hafnium or titanium, in order to precipitate a hydrous metal oxide in gel form;
   (ii) drying said gel at a temperature comprised within the range of from 150°C to 300°C, in order to obtain a catalyst support;
   (iii) impregnating said support by means of a sulfating agent selected from among aqueous sulfuric acid or aqueous solution of a sulfate salt;
   (iv) drying said impregnated support and calcining it in an oxidizing environment, at a temperature comprised within the range of from 400°C to 700°C.

2. Process according to claim 1, characterized in that in the step (i) a halide salt, and in particular a zirconium, hafnium or titanium chloride salt, is used.

3. Process according to claim 2, characterized in that said salt is selected from among zirconyl chloride octahydrate ($ZrOCl_2.8H_2O$), titanium tetrachloride ($TiCl_4$) and hafnium tetrachloride ($HfCl_4$).

4. Process according to claim 1, characterized in that in the (i) step an aqueous solution of said compound of zirconium, hafnium or titanium with a concentration of from 0.1 to 0.5 g/ml and preferably of the order of from 0.4 to 0.45 g/ml is used, and said hydrolysis is carried out by operating at room temperature, or at a temperature close to room temperature, with the pH value being adjusted at a value of the order of pH 8-9 by means of the addition of a base, and preferably ammonia.

5. Process according to claim 1, characterized in that in the step (ii), the precipitated gel is dried at a temperature comprised within the range of from 150°C to 300°C over a time of from 12 to 48 hours, by operating in an oxidizing atmosphere, and preferably in air.

6. Process according to claim 5, characterized in that in the step (ii), the drying is carried out at a temperature comprised within the range of from 150°C to 300°C over a time of about 24 hours, in an air atmosphere.

7. Process according to claim 1, characterized in that in the step (iii) the support is impregnated with aqueous sulfuric acid or aqueous sulfate salt with a concentration of from 0.4 M to 5 M, and according to the "wetness imbibition" method, leaving the sulfating agent and the support under mutual contact for a time period ranging from 12 to 48 hours, and with such total amounts of sulfating agent, as to have a sulfur amount in the end catalyst, which is comprised within the range of from 0.5 to 20% by weight and preferably of the order of from 2 to 5% by weight.

8. Process according to claim 1, characterized in that in the step (iv) the impregnated support is first dried at a temperature lower than 100°C, and then is calcined at a temperature comprised within the range of from 400°C to 700°C, for a time of from 1 to 6 hours, in an oxidizing atmosphere, preferably in air.

9. Process according to claim 8, characterized in that in said step (iv) the impregnated support is gradually heated (temperature increase rate about 3-5°C/minute) from the drying temperature up to about 500°C, and then is kept at that temperature for about 3 hours.

10. Process according to claim 1, characterized in that the support impregnated with the sulfating agent and dried, is further impregnated, by means of the method of "wetness imbibition" with an aqueous solution of a compound of a noble metal, in order to deposit an amount of noble metal comprised within the range of from about 0.1 to about 3% by weight.

11. Process according to claim 10, characterized in that the noble metal compound is selected from hexachloroplatinic acid ($H_2PtCl_6$) and ammonium complexes of tetravalent platinum.

12. Superacidic catalyst based on sulfated zirconium, hafnium or titanium oxide, which catalyst contains an amount of from 0.5 to 20%, and preferably an amount of the order of from 2 to 5%, by weight of sulfur, and which may additionally contain a noble metal, and preferably platinum, in an amount of from 0.1 to 3% by weight, obtained by means of the process according to claims from 1 to 11.

13. Process for isomerizing n-paraffins, characterized in that the superacidic catalyst according to claim 12 is used.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 174 836 (RESEARCH ASSOCIATION FOR UTILIZATION OF LIGHT OIL) <br> * page 1 - page 9 * <br> --- | 1-8, 10-13 | B01J27/053 <br> B01J21/06 <br> B01J37/03 |
| X | EP-A-0 365 147 (SUN REFINING AND MARKETING COMPANY) <br> * page 2 - page 4 * <br> --- | 1-3,7,8, 10-13 | |
| D,X | ADVANCES IN CATALYSIS <br> vol. 37, 1990, <br> pages 165 - 211; <br> KAZUSHI ARATA: 'SOLID SUPERACIDS' <br> * page 182 - page 185 * <br> --- | 1-3,7,13 | |
| A | EP-A-0 259 105 (THE BRITISH PETROLEUM COMPANY) <br> * page 2, line 42 - page 3, line 17; example 1 * <br> ----- | 1-4,7,9 | |

| | | | TECHNICAL FIELDS SEARCHED (Int. Cl.5) |
|---|---|---|---|
| | | | B01J |

The present search report has been drawn up for all claims

| Place of search | Date of completion of the search | Examiner |
|---|---|---|
| THE HAGUE | 24 AUGUST 1992 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................
& : member of the same patent family, corresponding document

EPO FORM 1503 03.82 (P0401)